# EUROPEAN PATENT SPECIFICATION

(11) **EP 2 727 756 B1**
(45) Date of publication and mention of the grant of the patent: **12.07.2017**
(21) Application number: 13187398.6
(22) Date of filing: 04.10.2013
(51) Int. Cl.: B60K 11/04, F01P 3/18

(54) **Vehicle cooling system**
Fahrzeugkühlsystem
Système de refroidissement de véhicule

(30) Priority: 30.10.2012 US 201213663817
(43) Date of publication of application: 07.05.2014
(73) Proprietor: Deere & Company, Moline, IL 61265 (US)
(72) Inventor: Kappelman, Joshua J, Cedar Falls, IA Iowa 50613 (US); Zimmerman, Kaleb, Waterloo, IA Iowa 50704-8000 (US); Shuttleworth, Adam J, Jesup, IA Iowa 50648 (US); Rush, Randy C, Cedar Falls, IA Iowa 50613 (US); Burk, Ronnie F, Cedar Falls, IA Iowa 506139622 (US)
(74) Representative: John Deere GmbH & Co. KG

(56) References cited:
- EP-A1- 1 253 392
- EP-A2- 0 952 024
- DE-U1- 29 504 867
- JP-A- 2006 069 423

## Description

The present disclosure relates to a vehicle cooling system having a plurality of heat exchangers and a fan.

Conventional vehicle cooling systems include a single stack of coolers. When cooling air blows through such a cooling system on a vehicle, a larger pressure drop for the cooling air across the stack of coolers reduces the ability to flow air through the system. This increases the power required to gain sufficient airflow to cool the vehicle. Coolers that are downstream in the stack receive cooling air that has already been heated by the coolers in front of them. This decreases the efficiency of the rear coolers. The air velocity must also be high on a single stack of coolers which can lead to debris buildup on coolers or the front grill screen if the machine is operating in a dirty environment.

Vehicle cooling arrangements with multiple cooling units arranged around a chamber or volume are shown in US 7,128,178, US 6,401,801, US 8,167,067, US 7,204,329, EP 1 253 392 A1, which comprises the features mentioned in the preamble of claim 1, and EP 0 952 024 A3.

According to an aspect of the present disclosure, a multi-faced assembly of cooling units locates the different coolers in a C shaped array around a single cooling fan. A charge air cooler is oriented substantially horizontally and is positioned at the top of the assembly. A hydraulic oil cooler is oriented substantially horizontally and is positioned at the bottom of the assembly. A radiator, condenser and fuel coolers are oriented substantially vertically and are positioned at the front of the assembly. A single cooling fan is located at the rear and pulls air through all the coolers.
Fig. 1 is a right front top perspective view of a vehicle cooling assembly embodying the invention;
Fig. 2 is a right rear perspective view of the assembly of Fig. 1 with parts removed for clarity;
Fig. 3 is a right rear bottom perspective view of the assembly of Fig. 1 with parts removed for clarity;
Fig. 4 is a right rear top perspective view of the assembly of Fig. 1;
Fig. 5 is left rear top perspective view of the assembly of Fig. 1; and
Fig. 6 is a right front top perspective view of the assembly of Fig. 1 with the top heat exchanger removed.

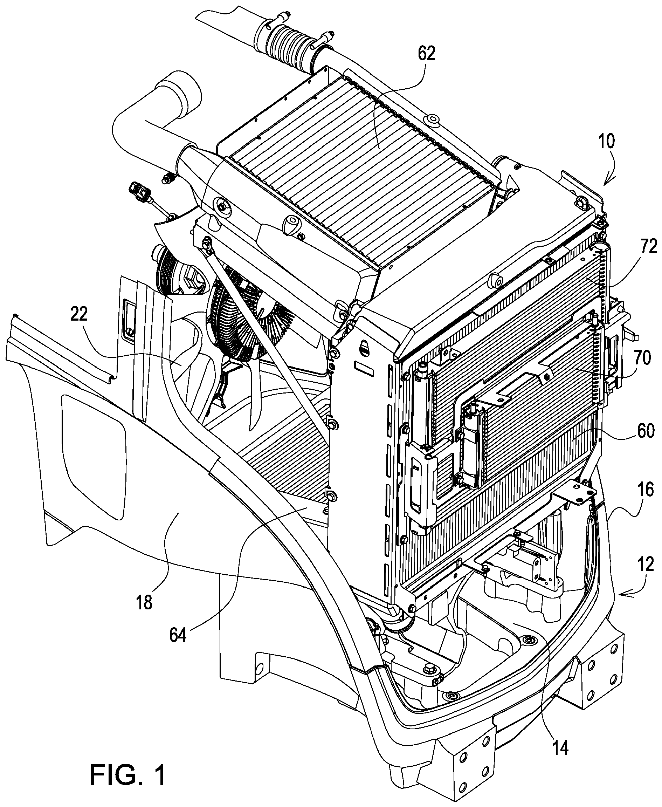

Referring to Figs. 1-3, a vehicle, such as an agricultural tractor, includes a cooling assembly 10 and a structural frame 12 which is attached to the vehicle chassis (not shown). The frame 12 includes a bottom part 14, a left side part 16 and a right side part 18. The frame 12 supports the cooling assembly 10.

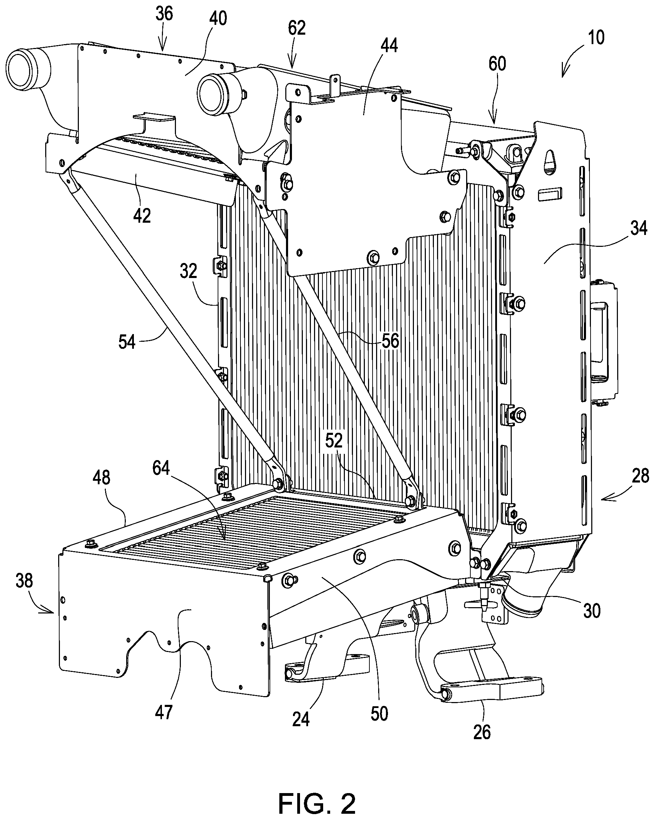

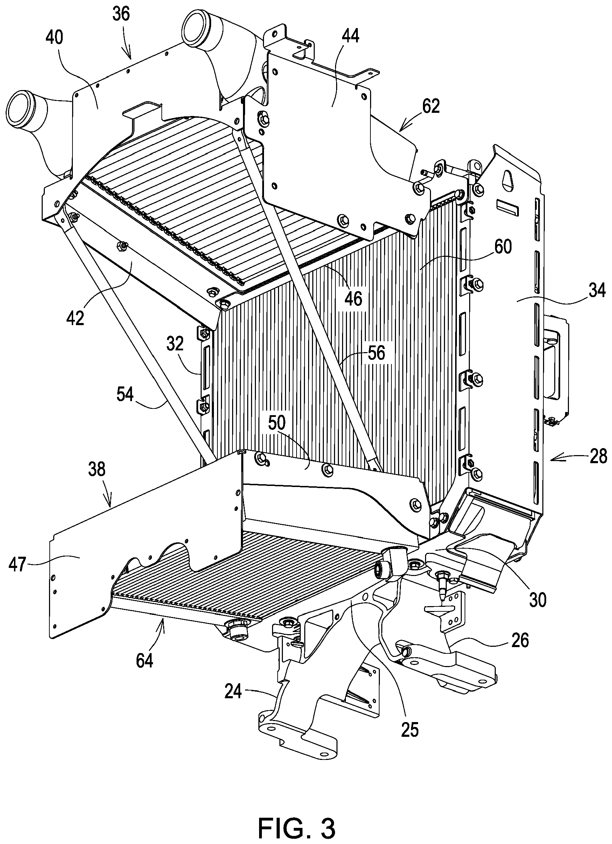

Referring now to Figs. 2 and 3, brackets 24 and 26 are attached to the frame 12 and depend downwardly from a base 25. The base 25 support a radiator or front frame 28. The radiator frame 28 includes a bottom panel 30, a left panel 32 and a right panel 34. Also supported by the brackets 24 and 26 is an upper cooler frame 36 and a bottom cooler frame 38. Upper cooler frame 36 includes a rear panel 40, a left panel 42 and a right panel 44 and a front panel 46. Lower cooler frame 38 includes a rear panel 47, a left panel 48, a right panel 50 and a front panel 52. Left and right support arms 54 and 56 extend diagonally upwardly and rearwardly from the front panel 52 of bottom cooler frame 38 to the rear panel 40 of upper cooler frame 36. Upper cooler frame 36 slopes upwardly from front to rear. Bottom cooler frame 38 slopes downwardly from front to rear.

The radiator frame 28 supports and partially encloses a first or front cooler or heat exchanger 60, preferably a conventional vertically oriented radiator. The upper cooler frame 36 supports and partially encloses a second or top cooler or heat exchange unit 62, preferably a charge air cooler. The bottom cooler frame 38 supports and partially encloses a third or bottom cooler or heat exchange unit 64, preferably an hydraulic oil cooler. Viewed from the left side, this assembly of heat exchangers forms a C-shaped array which partially surrounds a volume. Fan 22 is positioned at the rear end of this volume and fan 22 thereby draws air though radiator 60, charge air cooler 62 and hydraulic oil cooler 64.

As best seen in Fig. 1, a fuel cooler 70 is mounted in front of radiator 60 and an air conditioning condenser 72 is mounted between the radiator 60 and the fuel cooler 70. With this system the first or front heat exchanger 60 is spaced apart from and in front of the fan 22. The second or top heat exchanger 62 is positioned between a top portion of the fan 22 and a top portion of the first heat exchanger 60. The third or bottom heat exchanger 64 is positioned between a bottom portion of the fan 22 and a bottom portion of the first heat exchanger 60.

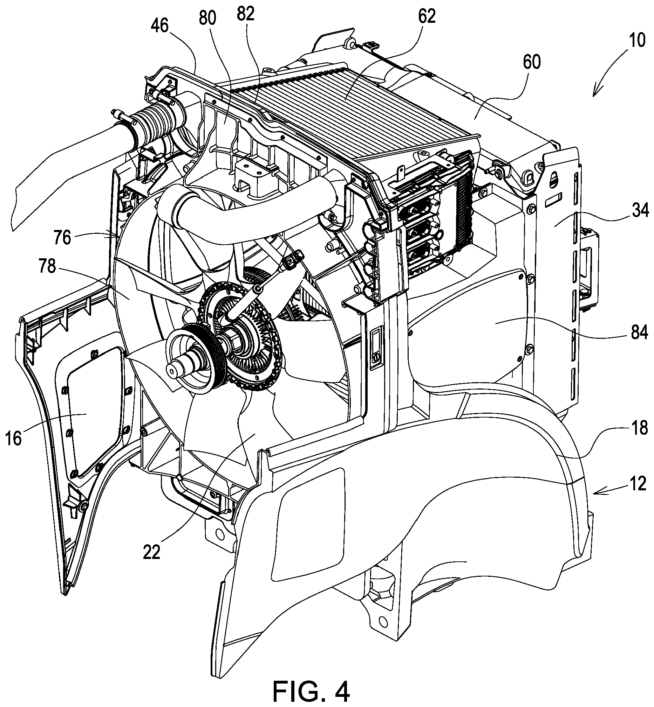

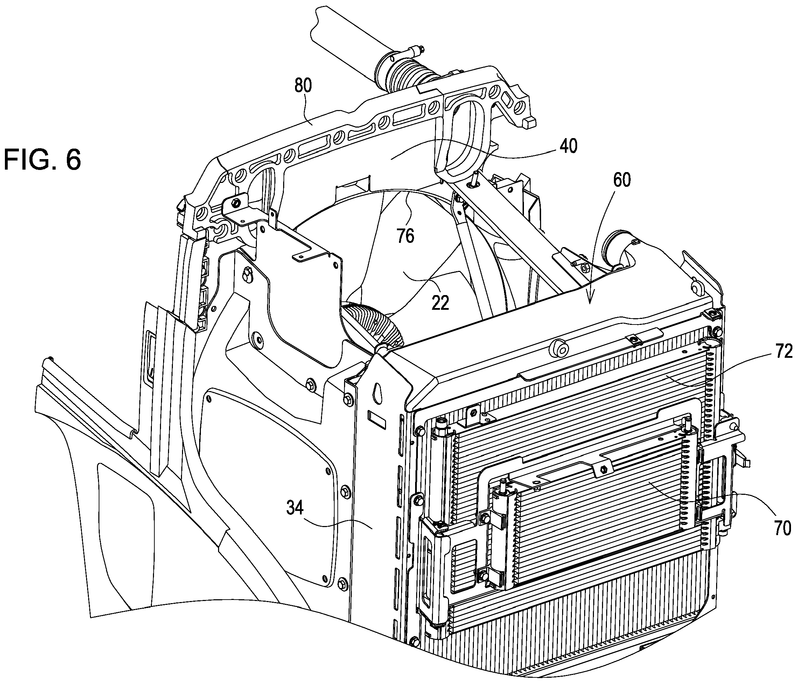

Referring now to Figs. 4 and 6, the fan 22 is surrounded by a structural fan shroud 76. Fan shroud 76 includes a cylindrical portion 78 which encircles the fan 22 and a flange 80 which projects upwardly from the cylindrical portion 78. The flange is attached to the rear side of a plate 82, and rear panel 40 of upper cooler frame 36 is attached to the front side of plate 82. As a result, the fan shroud 76 forms a structural support for at least the rear end of top heat exchanger 62.

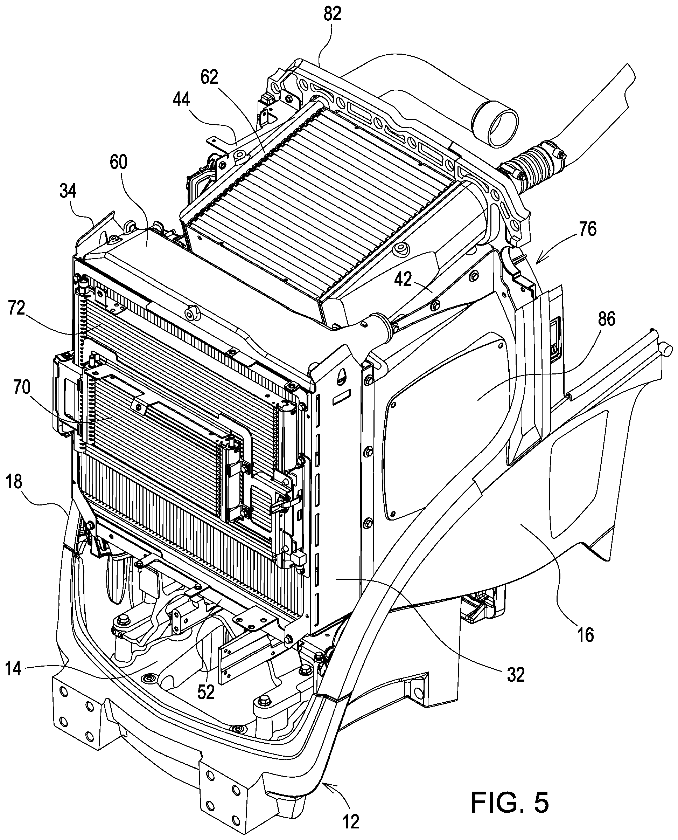

As best seen in Fig. 4, a right side panel 84 covers the space between the right sides of heat exchangers 60, 62 and 64. As best seen in Fig. 5, a left side panel 86 covers the space between the left sides of heat exchangers 60, 62 and 64.

With this design, the different coolers are distributed among multiple different stacks of coolers, thus increasing the effective air flow cross sectional area of the system. The increased air flow cross sectional area creates a lower pressure drop across the entire system. The lower pressure drop allows the system to flow more total cooling air through it. Each cooler stack receives lower temperature air than if there was a single stack of coolers. This also increases the efficiency of the coolers. Lowering the velocity of the air into each cooler stack also benefits the system by lowering the exposure to debris buildup on the coolers or on the outer hood screen.

This cooling system design maintains forward visibility while increasing vehicle power and heat rejection capability. Further, cleaning and assembly of the cooling package is improved over current state of the art cooling packages. This system also lowers the noise produced by the cooling system fan.

## Claims

1. A vehicle cooling system (10), comprising:
a fan (22);
a first heat exchanger (60);
a second heat exchanger (62) positioned between a top portion of the fan (22) and a top portion of the first heat exchanger (60); and
a third heat exchanger (64) positioned between a bottom portion of the fan (22) and a bottom portion of the first heat exchanger (60), **characterized in that**,
the first heat exchanger (60) is spaced apart from and in front of the fan (22) the first heat exchanger (60) comprises a radiator;
the second heat exchanger (62) comprises a charge air cooler; and
the third heat exchanger (64) comprises a hydraulic oil cooler, and
left and right support arms (54, 56) extend diagonally upwardly and rearwardly from a front end of a bottom cooler frame (38) to a rear end of an upper cooler frame (36).

2. The cooling system (10) according to claim 1, wherein:
a fan shroud (76) surrounds the fan (22); and the fan shroud (76) includes a cylindrical portion (78) which encircles the fan (22); and a flange (80) which projects upwardly from the cylindrical portion (78); the flange is attached to the rear side of a plate (82), and a rear panel (40) of the upper cooler frame (36) is attached to the front side of plate 82;
the fan shroud (76) forming a structural support for a portion of the top heat exchanger (62).

3. The cooling system (10) according to one of the claims 1 or 2, wherein:
a bracket supports (24, 26) the upper cooler frame (36) and the bottom cooler frame (38).

## Patentansprüche

1. Fahrzeugkühlsystem (10), das Folgendes umfasst:
einen Lüfter (22);
einen ersten Wärmetauscher (60);
einen zweiten Wärmetauscher (62), der zwischen einem oberen Abschnitt des Lüfters (22) und einem oberen Abschnitt des ersten Wärmetauschers (60) positioniert ist; und
einen dritten Wärmetauscher (64), der zwischen einem oberen Abschnitt des Lüfters (22) und einem unteren Abschnitt des ersten Wärmetauschers (60) positioniert ist, **dadurch gekennzeichnet, dass** der erste Wärmetauscher (60) von dem Lüfter (22) beabstandet ist und sich vor diesem befindet;
der erste Wärmetauscher (60) einen Kühler umfasst;
der zweite Wärmetauscher (62) einen Ladeluftkühler umfasst; und
der dritte Wärmetauscher (64) einen Hydraulikölkühler umfasst, und
sich ein linker und ein rechter Stützarm (54, 56) von einem vorderen Ende eines unteren Kühlerrahmens (38) zu einem hinteren Ende eines oberen Kühlerrahmens (36) diagonal nach oben und nach hinten erstrecken.

2. Kühlsystem (10) nach Anspruch 1, wobei:
eine Lüfterhaube (76) den Lüfter (22) umgibt; und
die Lüfterhaube (76) einen zylinderförmigen Abschnitt (78), der den Lüfter (22) umschließt, und einen Flansch (80), der von dem zylinderförmigen Abschnitt (78) nach oben vorragt, umfasst; wobei der Flansch an der Rückseite einer Platte (82) befestigt ist und eine Rücktafel (40) des oberen Kühlerrahmens (36) an der Vorderseite der Platte (82) befestigt ist;
die Lüfterhaube (76) eine strukturelle Abstützung für einen Abschnitt des oberen Wärmetauschers (62) bildet.

3. Kühlsystem (10) nach einem der Ansprüche 1 oder 2, wobei:
eine Halterung (24, 26) den oberen Kühlerrahmen (36) und den unteren Kühlerrahmen (38) stützt.

## Revendications

1. Système de refroidissement de véhicule (10) comprenant :
un ventilateur (22) ;
un premier échangeur thermique (60) ;
un deuxième échangeur thermique (62) positionné entre une partie supérieure du ventilateur (22) et une partie supérieure du premier échangeur thermique (60) ; et
un troisième échangeur thermique (64) positionné entre une partie inférieure du ventilateur (22) et une partie inférieure du premier échangeur thermique (60), **caractérisé en ce que** le premier échangeur thermique (60) est espacé du ventilateur (22) et se trouve devant celui-ci,
le premier échangeur thermique (60) comprend un radiateur ;
le deuxième échangeur thermique (62) comprend un dispositif de refroidissement d'air de suralimentation ; et
le troisième échangeur thermique (64) comprend un dispositif de refroidissement d'huile hydraulique ; et
des bras de support gauche et droit (54, 56) s'étendent en diagonale vers le haut et vers l'arrière d'une extrémité avant d'un châssis de dispositif de refroidissement inférieur (38) à une extrémité arrière d'un châssis de dispositif de refroidissement supérieur (36).

2. Système de refroidissement (10) selon la revendication 1, dans lequel :
un capot de ventilateur (76) entoure le ventilateur (22) ; et
le capot de ventilateur (76) comprend une partie cylindrique (78) qui encercle le ventilateur (22) ; et une bride (80) qui fait saillie vers le haut à partir de la partie cylindrique (78) ; la bride est fixée au côté arrière d'une plaque (82), et un panneau arrière (40) du châssis de dispositif de refroidissement supérieur (36) est fixé au côté avant de la plaque (82) ; le capot de ventilateur (76) formant un support structurel pour une partie de l'échangeur thermique supérieur (62).

3. Système de refroidissement (10) selon l'une des revendications 1 et 2, dans lequel :
une équerre (24, 26) supporte le châssis de dispositif de refroidissement supérieur (36) et le châssis de dispositif de refroidissement inférieur (38).
